# EUROPÄISCHE PATENTSCHRIFT

(11) **EP 2 894 004 B1**
(45) Veröffentlichungstag und Bekanntmachung des Hinweises auf die Patenterteilung: **25.10.2017**
(21) Anmeldenummer: 14150430.8
(22) Anmeldetag: 08.01.2014
(51) Int. Cl.: B23K 26/03, B23K 26/04, B23K 26/14, B23K 26/38

(54) **Laserbearbeitungsvorrichtung mit einer Kamera und einem angetriebenen Spiegel**
Device for laser machining with a camera and a movavble mirror
Dispositif de traitement laser avec une caméra et un mirroir mobile

(43) Veröffentlichungstag der Anmeldung: 15.07.2015
(73) Patentinhaber: Bystronic Laser AG, 3362 Niederönz (CH)
(72) Erfinder: Broger, David, 3400 Burgdorf (CH)
(74) Vertreter: Patentbüro Paul Rosenich AG

(56) Entgegenhaltungen:
- DE-A1-102007 013 623
- JP-A- H04 118 193
- JP-A- H10 249 566
- US-A- 5 449 882

## Beschreibung

Die Erfindung betrifft eine Laserbearbeitungsvorrichtung nach dem Oberbegriff des Anspruchs 1 und ein Laserbearbeitungsverfahren nach dem Oberbegriff des Anspruch 6 (siehe, z.B., JP H10 249 566 A). Die JP H04 118193 A offenbart die Detektion des Verschmutzungsgrades des Schutzglases mittels eines Bildsensors bzw. einer Kamera. Diese Kamera ist oberhalb eines stationären, starren Umlenkspiegels für den Arbeitslaserstrahl und in Linie mit diesem Spiegel und der Austrittsdüse positioniert.
Die JP H10 249566 A offenbart eine Anordnung von zwei Umlenkspiegeln für den Arbeitslaserstrahl, welche beide Spiegel gesteuert von einer Steuereinrichtung bewegt werden müssen, um den Arbeitslaserstrahl in Bezug auf die Austrittsdüse zu justieren. Über eine Kamera innerhalb des Bearbeitungskopfes wird die Position des Laserstrahls bestimmt und die Justierung mittels Bewegung beider Spiegel bewirkt. Die Kamera ist dabei zwischen dem letzten Umlenkspiegel und einem optischen Element oberhalb der Austrittsdüse positioniert.
Die EP1728582A1 offenbart eine Einrichtung zur Erfassung von Veränderungen des Laserstrahls. Dabei ist ein Sensor zur Erfassung von Laserstrahlveränderungen vor dem Laserbearbeitungskopf angeordnet. Eine Steuerung wertet die Daten des Sensors aus und steuert einen adaptiven Spiegel an. Mit den in-process ermittelten Daten wird der adaptive Spiegel 2, entsprechend vorgegebener Daten, verstellt. Die Steuereinheit kann die Messwerte des Laserstrahls erfassen und mit Sollwerten vergleichen. Mit einem solchen System kann eine Veränderung des Durchmessers des Laserstrahls zwischen dem Auskoppelspiegel des Lasers und dem Bearbeitungskopf der Laserbearbeitungsmaschine kompensiert werden. Ein ähnliches Prinzip ist aus der EP1890836B1 bekannt.
Die US5449882 offenbart ein Laserbearbeitungssystem, bei dem ein Strahlteiler mittels piezoelektrischem Antrieb justierbar ist. Ein Mikroskop-Kopf kann auf das zu bearbeitende Objekt fokussiert werden, um die anfängliche Lage des Laser-Spots auf dem Objekt zu positionieren. Die Ansteuerung des piezoelektrischen Antriebes erfolgt durch das Bedienpersonal mittels eines Joysticks.

Die EP0147525B1 offenbart eine Laserbearbeitungsvorrichtung, bei der in Abhängigkeit der Abweichung der Strahllage von einem Soll-Wert eine automatische Verstellung von Umlenkspiegeln erfolgt. Zu diesem Zweck ist eine Prüfvorrichtung vorgesehen, die sich unmittelbar oberhalb der Austrittsdüse befindet. Diese Art von Detektor ist einerseits in der Lage, einen Laserstrahl, auch wenn er dem nicht sichtbaren Bereich angehört, feststellen zu können, ohne selbst Schaden durch den Laserstrahl zu nehmen und der die Abweichung des Ist-Werts von einem Soll-Wert, also der gewünschten Normallage des Laserstrahls, in einen geeigneten Anzeige- und/oder Verstellwert für eine Verstellvorrichtung des oder der steuerbaren Spiegel umsetzt.

Die EP0154866B1 offenbart eine Laserbearbeitungsmaschine, bei der der Versatz bzw. Winkeländerungen des Laserstrahls über steuerbare Stellspiegel korrigiert wird. Zur Erkennung des Versatzes bzw. Winkeländerungen werden positionsempfindliche, photoelektrische Detektoren erwähnt. Dabei wird ein Anteil des Laserlichtes in Richtung Detektor ausgespiegelt oder ein Pilotlaser verwendet.

Die WO2012000648A1 offenbart eine 'closed loop' Steuerung für einen Laserbearbeitungsvorgang, bei dem eine Kamera verwendet wird.

Die EP1716963B1 offenbart eine Laser-Materialbearbeitung mit einem schwenkbaren Spiegel, der den Laserstrahl umlenkt.

Die DE102011004117A1 offenbart eine Laserbearbeitungsmaschine mit einem teildurchlässigen Spiegel hinter dem ein Strahlengang in Richtung einer Kamera geführt ist. Die Kamera und die damit verbundene Auswerteeinrichtung dienen der Prozessüberwachung, insbesondere Erkennen eines Kippwinkels eines Werkstückteils oder eine fehlerhafte Bearbeitung.

Die EP2216129A1 offenbart ein System zur Fokuslagenüberwachung. Dabei wird eine Linse angetrieben.
Es ist auch bekannt den Laserstrahl über eine manuelle Strahljustage zu positionieren. Die Ist-Position des Laserstrahles wird heute anhand der Lage eines Laser-Einschussloches auf einem vorübergehend angebrachten Klebestreifen an der Austrittsdüse beurteilt.
Die sich aus dem Stand der Technik ergebenden Nachteile bestehen darin, dass eine zuverlässige Bildgebung des auf dem Werkstück auftreffenden Laserstrahles insbesondere in Relation zur Austrittsdüse nicht möglich ist. Bei anderen Systemen bleibt es dem Bedienpersonal vorbehalten, den Laserstrahl per Hand zu positionieren. Ausserdem weisen die im Stand der Technik bekannten Lösungen, die einen Detektor benutzen, einen komplexen Aufbau auf und sind anfällig auf Verschmutzung. Nachteilig bei vielen dieser Lösungen ist auch, dass eine Detektion des Laserstrahles ausserhalb des Laserbearbeitungskopfes erfolgt, womit laterale Positionsverschiebungen des Laser-Spots am Werkstück überhaupt nicht registrierbar sind. Aufgabe der vorliegenden Erfindung ist es somit, diese Nachteile zu beseitigen und eine Laserbearbeitungsvorrichtung bereitzustellen, mit der eine zuverlässige Bildgebung der Austrittsdüse bzw. der Austrittsdüse vorgelagerter transparenter Bauteile erzielt werden kann. Ausserdem soll eine Automatisierung des Laserbearbeitungsvorganges gewährleistet werden, die zur einer optimalen Werkstückbearbeitung führt. Es soll verhindert werden, dass Fehler oder nicht zulässige Betriebszustände, die dem Bereich des Laserbearbeitungskopfes zugeordnet sind, zu einer qualitativ minderwertigen Bearbeitung führen.

Die Aufgabe wird durch die Merkmale der unabhängigen Ansprüche 1 und 6 gelöst. Weitere Merkmale sind in den Zeichnungen und den abhängigen Ansprüchen dargelegt.

Die Lösung der Aufgabe erfolgt also mit einer Laserbearbeitungsvorrichtung zur Bearbeitung eines Werkstückes mit einem Laserstrahl, insbesondere Laserschneidmaschine, umfassend einen Laserbearbeitungskopf mit einer Laser-Austrittsdüse, einen innerhalb des Laserbearbeitungskopfes definierten Laser-Strahlengang, einen einzigen im Laser-Strahlengang angeordneten und bewegbaren Spiegel zur Umlenkung des Laserstrahles auf die Austrittsdüse, und zumindest eine bildgebende Kamera, wobei der Kamera-Strahlengang von innen auf die Austrittsdüse gerichtet und die Kamera mit einer Bilddaten-Auswerteeinrichtung kommunikationsverbunden ist. Der Spiegel ist bewegbar und mit einem Antrieb zum Bewegen des Spiegels kommunikationsverbunden, wobei auch eine Steuereinrichtung mit dem Antrieb des einen Spiegels kommunikationsverbunden ist, wobei die Steuereinrichtung ausgebildet ist, um in Abhängigkeit der von der Auswerteeinrichtung durchgeführten Auswertung der von der Kamera aufgenommenen Bilddaten den Antrieb des Spiegels automatisch zu steuern, wodurch eine vorgegebene, insbesondere zentrierte, Ausrichtung des Laserstrahles lateral in der X-Y-Ebene in Bezug zur Austrittsdüse erzielbar ist.

Erfindungsgemäss ist der Spiegel ein wellenlängenselektiver Spiegel, der für den Laserstrahl im Laser-Strahlengang reflektierend ist und für zumindest einen Wellenlängenbereich des sichtbaren Spektrums durchlässig ist, und dass der Kamera-Strahlengang durch den Spiegel hindurch verläuft, wobei vorzugsweise der Laser-Strahlengang und der Kamera-Strahlengang im Abschnitt zwischen dem Spiegel und der Austrittsdüse überlagern.
Der Vorteil der Erfindung besteht darin, dass durch eine Bilderfassung die Ist-Position des Laserstrahles auf dem Werkstück exakt ermittelt werden kann. Über die Steuereinrichtung kann eine ebenso exakte Korrektur der Strahllage durch Verschwenken des Spiegels erfolgen, wodurch sich eine automatische Regelung ergibt. Diese Anordnung ermöglicht auch die Entkopplung des Laserstrahles von dem von der Kamera aufgenommenen (sichtbaren) Licht. Die Aufnahmen werden durch den in den Laserbearbeitungskopf eingespeisten Laserstrahl nicht beeinflusst, wodurch sich qualitativ hochwertige Bilder ergeben, die einer zuverlässigen Auswertung zugänglich sind.

Der Laserbearbeitungskopf, z.B. Schneidkopf, ist vorzugsweise mit einem motorisch betätigten, dynamischen Schwenkspiegel ausgerüstet. Damit lässt sich der Laserstrahl - relativ zur Austrittsdüse - lateral in der X/Y-Ebene verstellen. Die Kamera ist vorzugsweise innerhalb des Laserbearbeitungskopfes angeordnet. In Kombination mit der Kamera lässt sich eine automatische Strahljustierung, insbesondere Strahlzentrierung, relativ zur Austrittsdüsenöffnung realisieren. Durch Schwenken bzw. Bewegen des Spiegels durch den von der Steuereinrichtung angesteuerten Spiegelantrieb kann der Laserstrahl relativ zur Austrittsdüse exakt ausgerichtet werden.

Die Auswerteeinrichtung und die Steuereinrichtung sind ebenfalls miteinander kommunikationsverbunden bzw. bilden ohnedies eine bauliche Einheit.

Der Spiegel ist vorzugsweise im visuellen Spektralbereich transmissiv (bevorzugte Ausnahme: Wellenlänge für einen Pilotlaser wird reflektiert) und die Kamera befindet sich hinter dem Spiegel. Während oder vor dem Einstechen und/oder Schneiden wird mit der Kamera die laterale Strahllage kontrolliert und bei Bedarf nachjustiert. Damit ist eine Online-Kontrolle der Strahllage zur Austrittsdüse möglich.

Für eine kontinuierliche Kontrolle mit Nachführung (closed loop) wird ein hochdynamischer Spiegelantrieb benötigt (> 1 kHz). Eine Offline-Überwachung kann hingegen auch mit einem relativen langsamen Antrieb realisiert werden. Das Kamerasystem kann zusätzlich auch als Monitoring-System verwendet werden. Mit der erfindungsgemässen Anordnung besteht zusätzlich die Möglichkeit, die Grösse der Austrittsdüse zu bestimmen. Damit lässt sich einfach kontrollieren, ob die richtige Düse eingesetzt ist.

Ein Verlust der Düse (abgescherte Sollbruchstelle nach einem Crash oder ausgeklinkte Düse) kann ebenfalls kontrolliert werden. Es besteht auch die Möglichkein - insbesondere in Kombination mit einer Innenbeleuchtung - den Austrittsdüsentyp (verschiedene geometrische Formen) zu bestimmen.

Mit einem fokussierbaren Kamerasystem kann zusätzlich das Schutzglas oder optische Bauteile im Kamera-Strahlengang überwacht werden. Es ist möglich, die Anwesenheit und den Verschmutzungsgrad zu erfassen. Bekannte Systeme bestimmen den Verschmutzungsgrad anhand der Streustrahlung, anhand der nicht ermittelt werden kann, ob eine Verschmutzung mittig (kritisch) oder eher am Rand (unkritisch) vorliegt. Ein Kamerasystem kann Grösse und Lage der Verschmutzung bestimmen und daraus ableiten, ob dies für den Laserbearbeitungsvorgang nun kritisch oder unkritisch ist. Diese Merkmale erhöhen die Prozessfähigkeit der Laserschneidanlage.

Bevorzugt wird während oder vor dem Einstechen und/oder Schneiden mit der Kamera die laterale Strahllage kontrolliert und bei Bedarf nachjustiert. Damit ist eine Online-Kontrolle der Strahllage zur Düse möglich.

Die Kamera ist zur Aufnahme von sichtbarem Licht ausgebildet und vorzugsweise oberhalb der Austrittsdüsenöffnung und hinter dem Spiegel angeordnet.

Eine bevorzugte Ausführungsform zeichnet sich dadurch aus, dass die Kamera oberhalb des Spiegels, vorzugsweise in einer Linie mit der Austrittsdüsenöffnung und dem Spiegel, angeordnet ist. Hier befindet sich der Spiegel zwischen Austrittsdüse und Kamera. Der Kamerastrahlengang ist somit nicht umgelenkt, wodurch sich eine kompakte Bauweise ergibt.

Bevorzugt ist die Kamera innerhalb des Laserbearbeitungskopfes angeordnet, d.h. der Kamerastrahlengang muss nicht aus dem Kopf herausgeführt werden.

Auch der Spiegel samt Antrieb befindet sich innerhalb des Laserbearbeitungskopfes. Der Laserbearbeitungskopf stellt somit ein kompaktes Modul mit weit mehr integrierter Funktionalität dar, als dies bei bekannten Systemen der Fall ist.

Eine bevorzugte Ausführungsform zeichnet sich dadurch aus, dass der Antrieb des Spiegels ein dynamischer Antrieb ist, dessen Dynamik vorzugsweise zumindest 1 kHz, besonders bevorzugt zumindest 2kHz beträgt. Dies ermöglicht eine Echtzeit-Nachführung des Laserstrahles, wodurch qualitativ hochwertige Schnitte erzielt werden können. Bevorzugt ist der Antrieb ein piezoelektrischer Antrieb.

Eine bevorzugte Ausführungsform zeichnet sich dadurch aus, dass die Kamera eine Fokussiereinrichtung umfasst, wobei vorzugsweise die Kamera mit der Fokussiereinrichtung sowohl auf den Bereich der Austrittsdüse als auch auf den Bereich eines hinter der Austrittsdüse angeordneten Schutzglases scharf einstellbar ist.

In einer alternativen Ausführungsform umfasst die Laserbearbeitungsvorrichtung zumindest zwei Kameras, wobei eine Kamera auf den Bereich der Austrittsdüse und die andere Kamera auf den Bereich eines hinter der Austrittsdüse angeordneten Schutzglases scharf gestellt ist.

Dadurch kann nicht nur die Austrittsdüse oder der Laserspot am Werkstück erfasst werden, sondern auch Bauteile innerhalb des Laserbearbeitungskopfes überwacht werden. Interessant ist in diesem Zusammenhang insbesondere die Überwachung von Verschmutzungszuständen oder das Vorhandensein dieser Bauteile.

Gegebenenfalls kann in zumindest einem Kamerastrahlengang oder in den Strahlengängen der zwei Kameras jeweils ein Strahlteiler angeordnet sein.

Die Aufgabe wird auch mit einem Laserbearbeitungsverfahren, insbesondere Laserschneidverfahren, zum Bearbeiten eines Werkstückes mit einem Laserstrahl erreicht. Dieses wird mit einer Laserbearbeitungsvorrichtung, (insbesondere nach einer der vorhergehenden Ausführungsformen) durchgeführt, die einen Laserbearbeitungskopf mit einer Laser-Austrittsdüse, einen innerhalb des Laserbearbeitungskopfes definierten Laser-Strahlengang und eine bildgebende Kamera umfasst, wobei der Kamera-Strahlengang von innen auf die Austrittsdüse gerichtet ist. Mit der Kamera wird zumindest ein Bild aufgenommen und mit einer Auswerteeinrichtung ausgewertet, wobei anhand der Bilddaten zumindest die Position des Laserstrahls in Bezug auf die Austrittsdüsenöffnung ermittelt wird. In Abhängigkeit dieser Position, insbesondere in Abhängigkeit einer Abweichung von einer Soll-Position und/oder in Abhängigkeit einer Überschreitung eines vorgegebenen Grenzwertes für diese Position, wird automatisch ein einziger im Laser-Strahlengang angeordneter und bewegbarer Spiegel zur Umlenkung des Laserstrahles auf die Austrittsdüse bewegt wird, wodurch eine vorgegebene, insbesondere zentrierte oder sonstige, Ausrichtung des Laserstrahles lateral in der X-Y-Ebene in Bezug zur Austrittsdüse erzielt wird.

Erfindungsgemäss umfasst das von der Kamera aufgenommene Bild die Kontur der Austrittsdüsenöffnung, und dass in Abhängigkeit einer Abweichung der Ist-Position des Laserstrahles von einer Soll-Position des Laserstrahles in Bezug zur Austrittsdüsenöffnung der Antrieb des Spiegels von der Steuereinrichtung derart gesteuert wird, dass der Laserstrahl die Soll-Position einnimmt.
Dies ermöglicht einerseits eine automatische Überwachung, die im Falle eines unerwünschten Zustandes, eines Fehlers, einer Lageabweichung zu einer Aktion der Steuereinrichtung führt, d.h. es erfolgt eine automatische Reaktion des Systems. Weiters stellt die Austrittsdüsenöffnung eine zuverlässige Referenz dar, die im selben Bild wie der am Werkstück auftreffende Laserstrahl (Spot) enthalten sind. Die Positionsbestimmung wird dadurch höchsten Anforderungen gerecht. Es wird eine automatisierte Justierung des Laserstrahles relativ zur Düsenöffnung durch Ansteuerung des Spiegels erreicht. Die Soll-Position ist vorzugsweise eine in Bezug zur Austrittsdüsenöffnung zentrierte Lage.

Eine bevorzugte Ausführungsform zeichnet sich dadurch aus, dass die Auswertung der Bilddaten in einer Auswerteeinrichtung eine Kantendetektion umfasst, insbesondere um die Kontur der Austrittsdüsenöffnung und/oder die Kontur des Laserstrahles zu ermitteln. Die Positionsbestimmung kann dadurch sehr genau erfolgen.

Eine bevorzugte Ausführungsform zeichnet sich dadurch aus, dass mit der Kamera während eines Laserbearbeitungsvorganges kontinuierlich oder jeweils in Zeitintervallen Aufnahmen gemacht werden und dass die Position des Laserstrahles, falls erforderlich, während des Bearbeitungsvorganges, vorzugsweise in Echtzeit, nachjustiert wird. Prozessbedingte (z.B. zdeitlich abhängige) Abweichungen können dadurch sofort kompensiert werden.

Eine bevorzugte Ausführungsform zeichnet sich dadurch aus, dass das Vorhandensein oder der Typ der Austrittsdüse oder die Grösse der Austrittsdüsenöffnung ermittelt wird, wobei vorzugsweise anhand der Grösse der Austrittsdüsenöffnung oder anhand der Innenform der Austrittsdüse der Typ der Austrittsdüse ermittelt wird. Ein Betrieb ohne Düse bzw. mit falscher Düse wird damit von vornherein verhindert.

Eine bevorzugte Ausführungsform zeichnet sich dadurch aus, dass das Vorhandensein oder der Verschmutzungsgrad eines hinter der Austrittsdüse angeordneten optischen Bauteiles oder Schutzglases ermittelt wird, wobei vorzugsweise eine räumliche Verteilung der Verschmutzung auf dem optischen Bauteil oder Schutzglas ermittelt wird, z.B. der Verschmutzungsgrad in dem zentralen Bereich und der Verschmutzungsgrad in einem peripheren Bereich des optischen Bauteils oder Schutzglases. Damit können auch andere Bauteile zuverlässig erfasst und in ihrem Zustand überwacht werden.

Eine bevorzugte Ausführungsform zeichnet sich dadurch aus, dass von der Steuereinrichtung eine Ausgabe einer den ermittelten Status betreffenden Information an einer Schnittstelle für das Bedienpersonal (z.B. Bildschirm, akustische Anzeige, Blinklicht, etc.) ist. Das Bedienpersonal kann dadurch sofort benachrichtigt werden, wenn ein Fehler bzw. unzulässiger Zustand eintritt.

Eine bevorzugte Ausführungsform zeichnet sich dadurch aus, dass die Steuereinrichtung in Abhängigkeit vom ermittelten Status eine Unterbrechung des Laserbearbeitungsvorganges bewirkt.

Eine bevorzugte Ausführungsform zeichnet sich dadurch aus, dass während einer Aufnahme eines Bildes durch die Kamera das Innere des Laserbearbeitungskopfes mittels einer Innenbeleuchtung erleuchtet wird. Dadurch kann die Bildqualität weiter erhöht werden.

Vorteilhafte Weiterbildungen sind in den Figuren und in den abhängigen Patentansprüchen dargelegt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erfindungsgemässe Laserbearbeitungsvorrichtung,
- Fig. 2: eine Aufnahme eines nicht-zentrierten Laserstrahles,
- Fig. 3: eine Aufnahme eines in Bezug zur Austrittsdüsenöffnung zentrierten Laserstrahles, und
- Fig. 4: einen schematischen Verfahrensablauf.

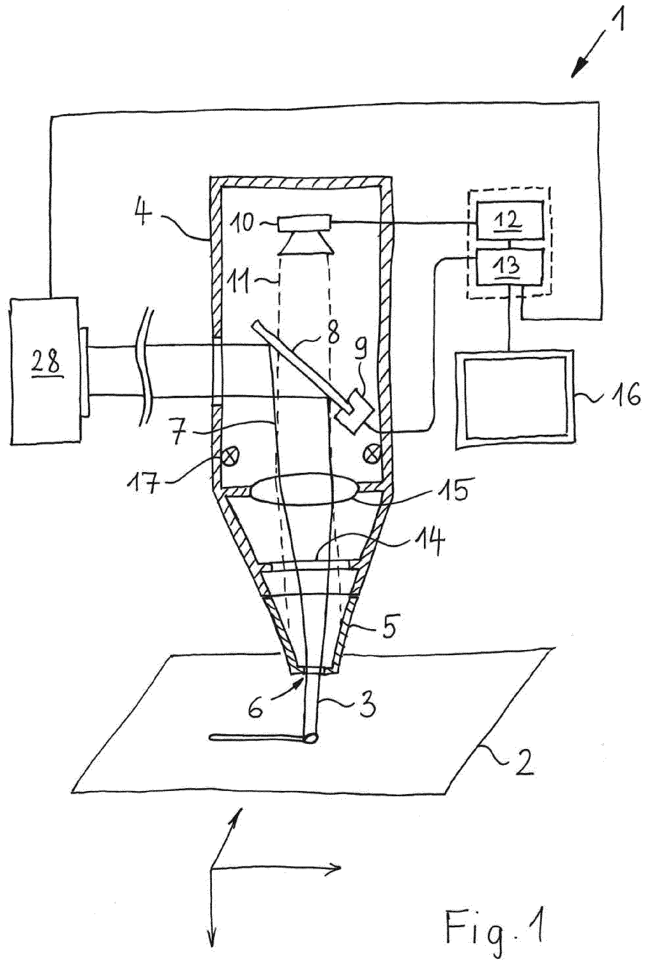

Fig. 1 zeigt eine Laserbearbeitungsvorrichtung 1 zur Bearbeitung eines Werkstückes 2 mit einem Laserstrahl 3 in Form einer Laserschneidmaschine. Die Laserbearbeitungsvorrichtung 1 umfasst einen Laserbearbeitungskopf 4 mit einer Laser-Austrittsdüse 5, einen innerhalb des Laserbearbeitungskopfes 4 definierten Laser-Strahlengang 7, einen im Laser-Strahlengang 7 angeordneten Spiegel 8 zur Umlenkung des Laserstrahles 3 auf die Austrittsdüse 5, einen Antrieb 9 zum Bewegen des Spiegels 8 und eine bildgebende Kamera 10, wobei der Kamera-Strahlengang 11 von innen auf die Austrittsdüse 5 gerichtet ist.

Im Laser-Strahlengang 7 ist weiters ein optisches Bauteil 15, z.B. eine Sammellinse, und ein Schutzglas 14 angeordnet, bevor der Laserstrahl durch die Austrittsdüsenöffnung 6 aus dem Laserbearbeitungskopf gelangt. Das Schutzglas 14 verhindert, dass Schmutz und Feuchtigkeit in den Laserbearbeitungskopf 4 dringt.

Die Kamera 10 ist mit einer Bilddaten-Auswerteeinrichtung 12 und der Antrieb 9 des Spiegels 8 mit einer Steuereinrichtung 13 kommunikationsverbunden, wobei die Steuereinrichtung 13 ausgebildet ist, um in Abhängigkeit der von der Auswerteeinrichtung 12 durchgeführten Auswertung der von der Kamera 10 aufgenommenen Bilddaten den Antrieb 9 des Spiegels 8 automatisch zu steuern, wodurch eine vorgegebene, insbesondere zentrierte, Ausrichtung des Laserstrahles 3 in Bezug zur Austrittsdüse 5 erzielbar ist.
Die Auswerteeinrichtung 12 und die Steuereinrichtung 13 können eine bauliche Einheit bilden, z.B. in Form eines Steuermoduls oder eines Rechners.

Der Spiegel 8 ist gemäß der Erfindung wellenlängenselektiver Spiegel, der für den Laserstrahl 3 im Laser-Strahlengang 7 reflektierend ist und für zumindest einen Wellenlängenbereich des sichtbaren Spektrums durchlässig ist. Der Kamera-Strahlengang 11 verläuft durch den Spiegel 8 hindurch. Dabei überlagern der Laser-Strahlengang 7 und der Kamera-Strahlengang 11 im Abschnitt zwischen dem Spiegel 8 und der Austrittsdüse 5 miteinander.
Die Kamera 10 ist oberhalb des Spiegels 8 in einer Linie mit der Austrittsdüsenöffnung 6 und dem Spiegel 8 angeordnet.
Der Antrieb 9 des Spiegels 8 ein dynamischer Antrieb, dessen Dynamik vorzugsweise zumindest 1kHz, besonders bevorzugt zumindest 2kHz beträgt.
Die Kamera 10 umfasst vorzugsweise eine Fokussiereinrichtung, mit der die Kamera 10 sowohl auf den Bereich der Austrittsdüse 5 als auch auf den Bereich eines hinter der Austrittsdüse 5 angeordneten Schutzglases 14 scharf einstellbar ist.
Die Steuereinrichtung 13 ist ebenfalls mit einer Schnittstelle 16 für das Bedienpersonal (in Form eines Bildschirmes) verbunden und mit der Laserquelle 28. Die ein Koordinatensystem bildenden Pfeile im unteren Bereich des Bildes deuten an, dass entweder das Werkstück 2 bzw. der Werkstückträger (nicht dargestellt) und/oder Laserbearbeitungskopf bewegbar sind, um z.B. eine Schneidbewegung zu realisieren.

Im Folgenden wird ein erfindungsgemässes Laserbearbeitungsverfahren, insbesondere Laserschneidverfahren, zum Bearbeiten eines Werkstückes 2 mit einem Laserstrahl 3 beschrieben. Dieses wird mit einer Laserbearbeitungsvorrichtung 1 durchgeführt, die einen Laserbearbeitungskopf 4 mit einer Laser-Austrittsdüse 5, einen innerhalb des Laserbearbeitungskopfes 4 definierten Laser-Strahlengang 7 und eine bildgebende Kamera 10 umfasst, wobei der Kamera-Strahlengang 11 von innen (d.h. von innerhalb des Laserbearbeitungskopfes) auf die Austrittsdüse 5 gerichtet ist.

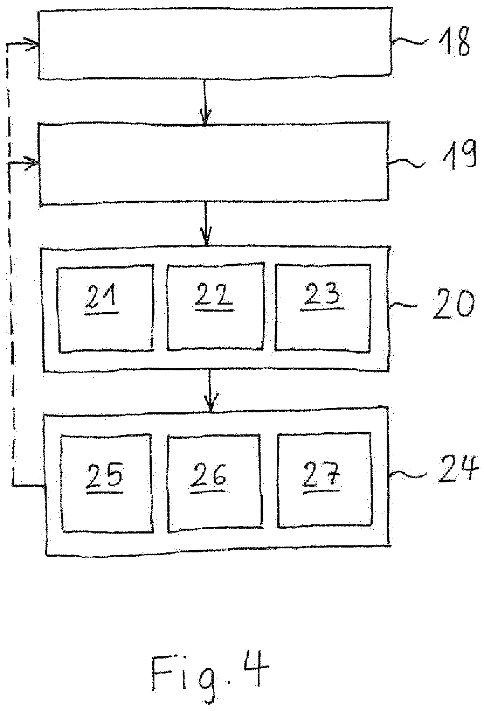

Fig. 4 zeigt eine Ausführungsform, bei der zunächst in einem optionalen Schritt (falls eben erforderlich) die Fokuseinstellung der Kamera eingestellt wird (Verfahrensschritt: Fokussieren 18), z.B. wird die Kamera auf die Austrittsdüsenöffnung 6 oder ein Schutzglas 14 scharf gestellt.

Anschliessend wird mit der Kamera 10 zumindest ein Bild aufgenommen (Verfahrensschritt: Bildaufnahme 19). Die Bilddaten werden einer Auswerteeinrichtung 12 ausgewertet, wobei anhand der Bilddaten zumindest ein Ist-Statusmerkmal des Laserbearbeitungskopfes 4 ermittelt wird (Verfahrensschritt: Auswertung 20).

Die Auswertung 20 in der Auswerteeinrichtung 12 kann z.B. folgende Ist-Statusmerkmale betreffen: die Ermittlung 21 der Position des Laserstrahles (in Bezug zur Austrittsdüse 5) und/oder die Ermittlung 22 von Merkmalen betreffend die Austrittsdüse 5 (z.B. Vorhandensein, Typ, Grösse der Austrittsdüsenöffnung 6, etc.) und/oder die Ermittlung 23 von Merkmalen betreffend das Schutzglas 14 und/oder eines optischen Bauteil 15 (z.B. Vorhandensein, Verschmutzungsgrad, etc.).

In weiterer Folge setzt die Steuereinrichtung 13 in Abhängigkeit des ermittelten Ist-Statusmerkmales, insbesondere in Abhängigkeit einer Abweichung des ermittelten Ist-Statusmerkmales von einem Soll-Statusmerkmal und/oder in Abhängigkeit einer Überschreitung eines vorgegebenen Grenzwertes durch das ermittelte Ist-Statusmerkmal, automatisch zumindest eine Aktion 24.

Das Setzen einer Aktion 24 kann z.B. umfassen: eine Verstellung 25 des Spiegels 8 durch Ansteuerung des Antriebes 9 und/oder eine Ausgabe 26 einer Information betreffend ein Ist-Statusmerkmal an einer Bedienschnittstelle 16 und/oder eine Unterbrechung 27 des Laserbearbeitungsvorganges.

Daraus ergeben sich folgende bevorzugte Ausführungsformen.

In einer Ausführungsform betrifft das Ist-Statusmerkmal die Position des Laserstrahles 3 und besteht die durch die Steuereinrichtung 13 gesetzte Aktion darin besteht, dass ein im Laser-Strahlengang 7 angeordneter Spiegel 8 zur Umlenkung des Laserstrahles 3 auf die Austrittsdüse 5 bewegt wird, wodurch eine vorgegebene, insbesondere zentrierte, Ausrichtung des Laserstrahles 3 in Bezug zur Austrittsdüse 5 erzielt wird.

Besonders bevorzugt ist, wenn das von der Kamera 10 aufgenommene Bild die Kontur der Austrittsdüsenöffnung 6 umfasst und wenn in Abhängigkeit einer Abweichung der Ist-Position des Laserstrahles 3 von einer Soll-Position des Laserstrahles 3 in Bezug zur Austrittsdüsenöffnung 6 der Antrieb 9 des Spiegels 8 von der Steuereinrichtung derart gesteuert wird, dass der Laserstrahl 3 die Soll-Position einnimmt (oder dieser ständig nachgefahren wird).

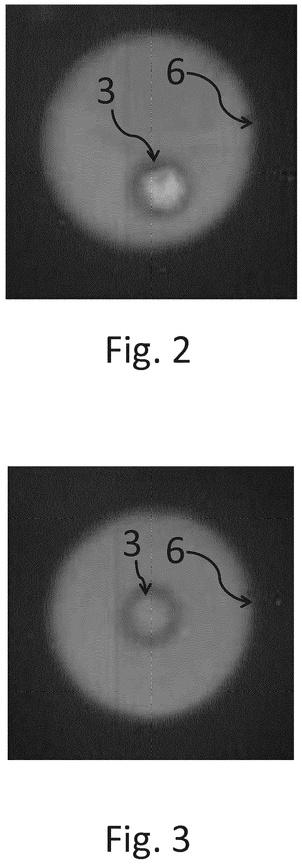

Fig. 2 und 3 zeigen Bildaufnahmen, bei denen der grosse Kreis der Kontur der Austrittsdüsenöffnung 6 entspricht und der kleine Kreis der Kontur der Prozesszone entspricht. Die Prozesszone ist jener Bereich, auf den der Laserstrahl 3 auf das Werkstück 2 trifft und erlaubt unmittelbaren Rückschluss auf die Lage des Laserstrahles 3. In Fig. 2 ist der Strahl zur Düse dezentral angeordnet und in Fig. 3 ist der Laserstrahl 3 korrekt zentriert.

Die Auswertung der Bilddaten in einer Auswerteeinrichtung 12 umfasst vorzugsweise eine Kantendetektion (unter Anwendung von Operatoren oder Filtern), insbesondere um die Kontur der Austrittsdüsenöffnung 6 und/oder die Kontur des Laserstrahles 3 zu ermitteln.

Bevorzugt ist, wenn mit der Kamera 10 während eines Laserbearbeitungsvorganges kontinuierlich oder jeweils in Zeitintervallen Aufnahmen gemacht werden und dass die Position des Laserstrahles 3, falls erforderlich, während des Bearbeitungsvorganges, vorzugsweise in Echtzeit, nachjustiert wird.

In einer alternativen Ausführungsform des erfindungsgemässen Verfahrens betrifft das Ist-Statusmerkmal das Vorhandensein oder den Typ der Austrittsdüse 5 oder die Grösse der Austrittsdüsenöffnung 6, wobei vorzugsweise anhand der Grösse der Austrittsdüsenöffnung 6 der Typ der Austrittsdüse 5 ermittelt wird. Fehlbestückungen können damit vermieden werden.

Das Ist-Statusmerkmal kann auch das Vorhandensein oder den Verschmutzungsgrad eines hinter der Austrittsdüse 5 angeordneten optischen Bauteiles 15 oder Schutzglases 14 betreffen, wobei vorzugsweise eine räumliche Verteilung der Verschmutzung auf dem optischen Bauteil 15 oder Schutzglas 14 ermittelt wird. Dies kann z.B. dadurch erfolgen, dass der Verschmutzungsgrad in dem zentralen Bereich und der Verschmutzungsgrad in einem peripheren Bereich des optischen Bauteils 15 oder Schutzglases 14 bestimmt und gegebenenfalls zueinander in Beziehung gesetzt wird.

Wie bereits erwähnt kann die von der Steuereinrichtung 13 gesetzte Aktion eine Ausgabe einer das Ist-Statusmerkmal betreffenden Information an einer Schnittstelle 16 für das Bedienpersonal sein oder eine Unterbrechung des Bearbeitungsvorganges.

Um die Bildqualität zu erhöhen kann während einer Aufnahme eines Bildes durch die Kamera 10 eine innerhalb des Laserbearbeitungskopfes 4 angeordnete Innenbeleuchtung 17 eingeschaltet sein (Fig. 1).

### Bezugszeichen liste

1 Laserbearbeitungsvorrichtung
2 Werkstück
3 Laserstrahl
4 Laserbearbeitungskopf
5 Laser-Austrittsdüse
6 Austrittsdüsenöffnung
7 Laser-Strahlengang
8 Spiegel
9 Antrieb
10 Kamera
11 Kamera-Strahlengang
12 Bilddaten-Auswerteeinrichtung
13 Steuereinrichtung
14 Schutzglas
15 Optisches Bauteil
16 Schnittstelle für das Bedienpersonal
17 Innenbeleuchtung
18 Verfahrensschritt: Fokussieren
19 Verfahrensschritt: Bildaufnahme
20 Verfahrensschritt: Auswertung
21 Ermittlung: Position des Laserstrahles
22 Ermittlung: Austrittsdüse
23 Ermittlung: Schutzglas/optisches Bauteil
24 Setzen einer Aktion durch die Steuereinrichtung
25 Aktion: Verstellung des Spiegels
26 Aktion: Ausgabe einer Information
27 Aktion: Unterbrechung des Laserbearbeitungsvorganges
28 Laserquelle

## Patentansprüche

1. Laserbearbeitungsvorrichtung (1) zur Bearbeitung eines Werkstückes (2) mit einem Laserstrahl (3), insbesondere Laserschneidmaschine, umfassend einen Laserbearbeitungskopf (4) mit einer Laser-Austrittsdüse (5), einen innerhalb des Laserbearbeitungskopfes (4) definierten Laser-Strahlengang (7), einen im Laser-Strahlengang (7) angeordneten und bewegbaren Spiegel (8) zur Umlenkung des Laserstrahles (3) auf die Austrittsdüse (5), und zumindest eine bildgebende Kamera (10), wobei der Kamera-Strahlengang (11) von innen auf die Austrittsdüse (5) gerichtet und die Kamera (10) mit einer Bilddaten-Auswerteeinrichtung (12) kommunikationsverbunden ist, wobei der Spiegel (8) mit einem Antrieb (9) zum Bewegen des Spiegels (8) kommunikationsverbunden ist, dass eine Steuereinrichtung (13) mit dem Antrieb (9) des einen Spiegels (8) kommunikationsverbunden ist, wobei die Steuereinrichtung (13) ausgebildet ist, um in Abhängigkeit der von der Auswerteeinrichtung (12) durchgeführten Auswertung der von der Kamera (10) aufgenommenen Bilddaten den Antrieb (9) des Spiegels (8) automatisch zu steuern, wodurch eine vorgegebene, insbesondere zentrierte, Ausrichtung des Laserstrahles (3) lateral in der X-Y-Ebene in Bezug zur Austrittsdüse (5) erzielbar ist, **dadurch gekennzeichnet, dass** die Laserbearbeitungsvorrichtung (1) einen einzigen Spiegel (8) umfasst, wobei der bewegbare Spiegel (8) ein wellenlängenselektiver Spiegel ist, der für den Laserstrahl (3) im Laser-Strahlengang (7) reflektierend ist und für zumindest einen Wellenlängenbereich des sichtbaren Spektrums durchlässig ist, und dass der Kamera-Strahlengang (11) durch den Spiegel (8) hindurch verläuft, wobei vorzugsweise der Laser-Strahlengang (7) und der Kamera-Strahlengang (11) im Abschnitt zwischen dem Spiegel (8) und der Austrittsdüse (5) überlagern.

2. Laserbearbeitungsvorrichtung nach Anspruch 1, **dadurch gekennzeichnet, dass** die Kamera (10) oberhalb des Spiegels (8), vorzugsweise in einer Linie mit der Austrittsdüsenöffnung (6) und dem Spiegel (8), angeordnet ist.

3. Laserbearbeitungsvorrichtung nach einem der Ansprüche 1 oder 2, **dadurch gekennzeichnet, dass** der Antrieb (9) des Spiegels (8) ein dynamischer Antrieb ist, dessen Dynamik vorzugsweise zumindest 1 kHz, besonders bevorzugt zumindest 2kHz beträgt.

4. Laserbearbeitungsvorrichtung nach einem der Ansprüche 1 bis 3, **dadurch gekennzeichnet, dass** die Kamera (10) eine Fokussiereinrichtung umfasst, wobei vorzugsweise die Kamera (10) mit der Fokussiereinrichtung sowohl auf den Bereich der Austrittsdüse (5) als auch auf den Bereich eines hinter der Austrittsdüse (5) angeordneten Schutzglases (14) scharf einstellbar ist.

5. Laserbearbeitungsvorrichtung nach einem der Ansprüche 1 bis 3, **dadurch gekennzeichnet, dass** die Laserbearbeitungsvorrichtung (1) zumindest zwei Kameras umfasst, wobei eine Kamera auf den Bereich der Austrittsdüse (5) und die andere Kamera auf den Bereich eines hinter der Austrittsdüse (5) angeordneten Schutzglases (14) scharf einstellbar ist, wobei gegebenenfalls in zumindest einem Kamerastrahlengang ein Strahlteiler angeordnet ist.

6. Laserbearbeitungsverfahren, insbesondere Laserschneidverfahren, zum Bearbeiten eines Werkstückes (2) mit einem Laserstrahl (3), mit einer Laserbearbeitungsvorrichtung (1), insbesondere nach einem der vorhergehenden Ansprüche, die einen Laserbearbeitungskopf (4) mit einer Laser-Austrittsdüse (5), einen innerhalb des Laserbearbeitungskopfes (4) definierten Laser-Strahlengang (7) und eine bildgebende Kamera (10) umfasst, **dadurch gekennzeichnet, dass** der Kamera-Strahlengang (11) von innen auf die Austrittsdüse (5) durch einen wellenlängenselektiven einzigen und im Laser-Strahlengang angeordneten und bewegbaren Spiegel (8) gerichtet ist, wobei mit der Kamera (10) zumindest ein Bild aufgenommen und mit einer Auswerteeinrichtung (12) ausgewertet wird, wobei anhand der Bilddaten zumindest die Position des Laserstrahls (3) in Bezug auf die Austrittsdüsenöffnung (6) ermittelt wird, und wobei in Abhängigkeit einer Abweichung von einer Soll-Position, automatisch der Spiegel (8) zur Umlenkung des Laserstrahles (3) auf die Austrittsdüse (5) bewegt wird, wodurch eine vorgegebene, insbesondere zentrierte oder sonstige, Ausrichtung des Laserstrahles (3) lateral in der X-Y-Ebene in Bezug zur Austrittsdüse (5) erzielt wird, wobei das von der Kamera (10) aufgenommene Bild die Kontur der Austrittsdüsenöffnung (6) umfasst und dass in Abhängigkeit einer Abweichung einer Ist-Position des Laserstrahles (3) von der Soll-Position des Laserstrahles (3) in Bezug zur Austrittsdüsenöffnung (6) der Antrieb (9) des Spiegels (8) von der Steuereinrichtung derart gesteuert wird, dass der Laserstrahl (3) die Soll-Position einnimmt.

7. Laserbearbeitungsverfahren nach Anspruch 6, **dadurch gekennzeichnet, dass** die Auswertung der Bilddaten in einer Auswerteeinrichtung (12) eine Kantendetektion umfasst, insbesondere um die Kontur der Austrittsdüsenöffnung (6) und/oder die Kontur des Laserstrahles (3) zu ermitteln.

8. Laserbearbeitungsverfahren nach einem der Ansprüche 6 oder 7, **dadurch gekennzeichnet, dass** mit der Kamera (10) während eines Laserbearbeitungsvorganges kontinuierlich oder jeweils in Zeitintervallen Aufnahmen gemacht werden und dass die Position des Laserstrahles (3), falls erforderlich, während des Bearbeitungsvorganges, vorzugsweise in Echtzeit, nachjustiert wird.

9. Laserbearbeitungsverfahren nach einem der Ansprüche 6 bis 8, **dadurch gekennzeichnet, dass** das Vorhandensein oder der Typ der Austrittsdüse (5) oder die Grösse der Austrittsdüsenöffnung (6) ermittelt wird, wobei vorzugsweise anhand der Grösse der Austrittsdüsenöffnung (6) oder anhand der Innenform der Austrittsdüse (5) der Typ der Austrittsdüse (5) ermittelt wird.

10. Laserbearbeitungsverfahren nach einem der Ansprüche 6 bis 9, **dadurch gekennzeichnet, dass** das Vorhandensein oder der Verschmutzungsgrad eines hinter der Austrittsdüse (5) angeordneten optischen Bauteiles (15) oder Schutzglases (14) ermittelt wird, wobei vorzugsweise eine räumliche Verteilung der Verschmutzung auf dem optischen Bauteil (15) oder Schutzglas (14) ermittelt wird, z.B. der Verschmutzungsgrad in dem zentralen Bereich und der Verschmutzungsgrad in einem peripheren Bereich des optischen Bauteils (15) oder Schutzglases (14).

11. Laserbearbeitungsverfahren nach einem der Ansprüche 6 bis 10, **dadurch gekennzeichnet, dass** von der Steuereinrichtung (13) eine Ausgabe einer den ermittelten Status betreffenden Information an einer Schnittstelle (16) für das Bedienpersonal erfolgt.

12. Laserbearbeitungsverfahren nach einem der Ansprüche 6 bis 11, **dadurch gekennzeichnet, dass** die Steuereinrichtung (13) in Abhängigkeit vom ermittelten Status eine Unterbrechung des Laserbearbeitungsvorganges bewirkt.

13. Laserbearbeitungsverfahren nach einem der Ansprüche 6 bis 12, **dadurch gekennzeichnet, dass** während einer Aufnahme eines Bildes durch die Kamera (10) das Innere des Laserbearbeitungskopfes (4) mittels einer Innenbeleuchtung (17) erleuchtet wird.

## Claims

1. A laser machining device (1) for machining a workpiece (2) with a laser beam (3), in particular a laser cutting machine, comprising a laser machining head (4) with a laser outlet nozzle (5), a laser beam path (7) defined within the laser machining head (4), a mirror (8) arranged and moveable within the laser beam path (7) for deflecting the laser beam (3) towards the outlet nozzle (5), and at least one imaging camera (10), wherein the camera beam path (11) is directed from the inside towards the outlet nozzle (5) and the camera has a communication link with an image data evaluation device (12), wherein the mirror (8) has a communication link with a drive (9) for moving the mirror (8), that a control device (13) has a communication link with the drive (9) of the one mirror (8), wherein the control device (13) is designed to automatically control the drive (9) of the mirror (8) in dependence of the evaluation carried out by the evaluation device (12), of the image data recorded by the camera (10), whereby a prescribed, in particular centred, orientation of the laser beam (3), laterally in the X-Y plane in relation to the outlet nozzle (5), is achievable, **characterised in that**
the laser machining device (1) comprises a single mirror (8) wherein the moveable mirror (8) is a wavelength-selective mirror which works as a reflector for the laser beam (3) in the laser beam path (7) and is permeable for at least one wavelength range of the visible spectrum, and that the camera beam path (11) runs through the mirror (8), wherein preferably the laser beam path (7) and the camera beam path (11) overlap in the section between the mirror (8) and the outlet nozzle (5).

2. The laser machining device according to claim 1, **characterised in that** the camera (10) is arranged above the mirror (8), preferably in one line with the nozzle outlet opening (6) and the mirror (8).

3. The laser machining device according to one of claims 1 or 2, **characterised in that** the drive (9) of the mirror (8) is a dynamic drive, the dynamic of which preferably amounts to at least 1kHz, particularly preferably at least 2kHz.

4. The laser machining device according to one of claims 1 to 3, **characterised in that** the camera (10) comprises a focussing device, wherein the camera (10), by means of the focussing device, may preferably be sharply focussed towards the area of the nozzle outlet (5) as well as towards the area in which a protective/safety glass (14) is arranged behind the nozzle outlet (5).

5. The laser machining device according to one of claims 1 to 3, **characterised in that** the laser machining device (1) comprises as least two cameras, wherein one camera may be sharply focussed toward the area of the nozzle outlet (5) and the other camera, toward the area of a protective glass (14) arranged behind the nozzle outlet (5), wherein if necessary a beam splitter is arranged in at least one camera beam path.

6. A laser machining method, in particular a laser cutting method, for machining a workpiece (2) with a laser beam (3), with a laser machining device (1), in particular according to one of the preceding claims, comprising a laser machining head (4) with a laser nozzle outlet (5), a laser beam path (7) defined inside the laser machining head (4) and an imaging camera (10), **characterised in that** the camera beam path (11) is directed from the inside toward the nozzle outlet (5) through a single wavelength-selective mirror (8) arranged and moveable within the laser beam path, wherein at least one image is recorded by the camera (10) and evaluated by an evaluation device (12), wherein by means of the image data at least the position of the laser beam (3) in relation to the outlet nozzle opening (6) is determined, and wherein in dependence of a deviation from a set position, the mirror (8) is automatically moved in order to deflect the laser beam (3) towards the nozzle outlet (5), whereby a prescribed, in particular centred or other, orientation of the laser beam (3) laterally in the X-Y plane in relation to the outlet nozzle (5) is achieved, wherein the image recorded by the camera (10) comprises the contour of the nozzle outlet opening (6) and that, in dependence of a deviation of the actual position of the laser beam (3) from the set position of the laser beam (3) in relation to the nozzle outlet opening (6), the drive (9) of the mirror (8) is controlled by the control device so that the laser beam (3) takes up the set position.

7. The laser machining method according to claim 6, **characterised in that** the evaluation of the image data in an evaluation device (12) comprises an edge detection, in particular in order to determine the contour of the nozzle outlet opening (6) and/or the contour of the laser beam (3).

8. The laser machining method according to claims 6 or 7, **characterised in that** pictures are taken with the camera (10) continuously or at intervals during a laser machining process and that, if necessary, the position of the laser beam (3) may be readjusted during the machining process, preferably in real time.

9. The laser machining method according to one of claims 6 to 8, **characterised in that** the presence or the type of the nozzle outlet (5) or the size of the nozzle outlet opening (6) is determined, wherein the type of nozzle outlet (5) is determined preferably on the basis of the size of the nozzle outlet opening (6) or on the basis of the inner shape of the nozzle outlet (5).

10. The laser machining method according to one of claims 6 to 9, **characterised in that** the presence or the degree of contamination of an optical component (15) or protective glass (14) arranged behind the outlet nozzle (5) is determined, wherein preferably a spatial distribution of the contamination on the optical component (15) or protective glass (14) is determined, for example the degree of contamination in the central area and the degree of contamination in a peripheral area of the optical component (15) or protective glass (14).

11. The laser machining method according to one of claims 6 to 10, **characterised in that** information is output by the control device (13) concerning the determined status at an interface (16) for the operating personnel.

12. The laser machining method according to one of claims 6 to 11, **characterised in that**, in dependence of the determined status, the control device (13) effects an interruption in the laser machining process.

13. The laser machining method according to one of claims 6 to 12, **characterised in that** the interior of the laser machining head (4) is illuminated by means of an interior light (17) during the taking of a picture by the camera (10).

## Revendications

1. Dispositif d'usinage au laser (1) destiné à usiner une pièce d'oeuvre (2) avec un faisceau laser (3), notamment découpeuse au laser, comprenant une tête d'usinage (4) au laser avec une buse de sortie (5) du laser, une trajectoire du faisceau laser (7) définie à l'intérieur de la tête d'usinage (4) au laser, un miroir (8) placé dans la trajectoire du faisceau laser (7) et mobile, destiné à faire dévier le faisceau laser (3) sur la buse de sortie (5) et au moins une caméra (10) restituant des images, la trajectoire du faisceau (11) de la caméra étant orientée par l'intérieur sur la buse de sortie (5) et la caméra (10) étant reliée en communication avec un dispositif d'évaluation (12) de données d'images, le miroir (8) étant relié en communication avec un entraînement (9) destiné à déplacer le miroir (8), un système de commande (13) étant relié en communication avec l'entraînement (9) dudit miroir (8), le système de commande (13) étant conçu pour piloter automatiquement l'entraînement (9) du miroir (8), en fonction de l'évaluation réalisée par le dispositif d'évaluation (12) des données d'images enregistrées par la caméra (10), suite à quoi une orientation prédéfinie, notamment centrée du faisceau laser (3) latéralement au plan X-Y par rapport à la buse d'orientation (5) peut être obtenue, **caractérisé en ce que** le dispositif d'usinage au laser (1) comporte un unique miroir (8), le miroir (8) mobile étant un miroir sélectif de longueur d'ondes réfléchissant pour le faisceau laser (3) dans la trajectoire du faisceau laser (7) et transparent pour au moins une gamme d'ondes du spectre visible et **en ce que** la trajectoire du faisceau (11) de la caméra s'écoule à travers le miroir (8), de préférence la trajectoire du faisceau laser (7) et la trajectoire du faisceau (11) de la caméra se superposant dans la partie entre le miroir (8) et la buse de sortie (5).

2. Dispositif d'usinage au laser selon la revendication 1, **caractérisé en ce que** la caméra (10) est placée au-dessus du miroir (8), de préférence en une ligne avec l'orifice (6) de la buse de sortie et le miroir (8).

3. Dispositif d'usinage au laser selon l'une quelconque des revendications 1 ou 2, **caractérisé en ce que** l'entraînement (9) du miroir (8) est un entraînement dynamique, dont la dynamique est de préférence d'au moins 1 kHz, de manière particulièrement préférée d'au moins 2 kHz.

4. Dispositif d'usinage au laser selon l'une quelconque des revendications 1 à 3, **caractérisé en ce que** la caméra (10) comprend un dispositif de focalisation, de préférence, avec la dispositif de focalisation, la caméra (10) pouvant être mise au point avec précision aussi bien sur la zone de la buse de sortie (5) qu'également sur la zone d'un verre protecteur (14) placé derrière la buse de sortie (5).

5. Dispositif d'usinage au laser selon l'une quelconque des revendications 1 à 3, **caractérisé en ce que** le dispositif d'usinage au laser (1) comprend au moins deux caméras, une caméra pouvant être mise au point avec précision sur la zone de la buse de sortie (5) et l'autre caméra sur la zone d'un verre protecteur (14) placé derrière la buse de sortie (5), le cas échéant, un séparateur de faisceau étant placé dans au moins une trajectoire de faisceau de la caméra.

6. Procédé d'usinage au laser, notamment procédé de découpage au laser, destiné à usiner une pièce d'oeuvre (2) avec un faisceau laser (3), avec un dispositif d'usinage au laser (1), notamment selon l'une quelconque des revendications précédentes, qui comprend une tête d'usinage (4) au laser avec une buse de sortie (5) du laser, une trajectoire du faisceau laser (7) définie à l'intérieur de la tête d'usinage (4) au laser et une caméra (10) qui délivre des images, **caractérisé en ce que** la trajectoire du faisceau (11) de la caméra est dévié à partir de l'intérieur sur la buse de sortie (5) par un unique miroir (8) sélectif de longueur d'ondes et placé dans la trajectoire du faisceau laser et mobile, à l'aide de la caméra (10), au moins une image étant enregistrée et évaluée avec un dispositif d'évaluation (12), à l'aide des données d'image, au moins la position du faisceau laser (3) en rapport à l'orifice (6) de la buse de sortie étant déterminée et en fonction d'un écart par rapport à une position de consigne, le miroir (8) étant automatiquement déplacé pour faire dévier le faisceau laser (3) sur la buse de sortie (5), suite à quoi une orientation prédéfinie, notamment centrée ou autre du faisceau laser (3) est obtenue latéralement au plan X-Y en rapport à la buse de sortie (5), l'image enregistrée par la caméra (10) englobant les contours de l'orifice (6) la buse de sortie et **en ce qu'**en fonction d'un écart entre une position réelle du faisceau laser (3) et la position de consigne du faisceau laser (3) en rapport à l'orifice (6) de la buse de sortie, l'entraînement (9) du miroir (8) est piloté par le système de commande, de telle sorte que le faisceau laser (3) adopte la position de consigne.

7. Procédé d'usinage au laser selon la revendication 6, **caractérisé en ce que** l'évaluation des données d'images dans un dispositif d'évaluation (12) comprend une détection des arêtes, notamment pour déterminer le contour de l'orifice (6) de la buse de sortie et/ou le contour du faisceau laser (3).

8. Procédé d'usinage au laser selon l'une quelconque des revendications 6 ou 7, **caractérisé en ce qu'**à l'aide de la caméra (10), pendant une opération d'usinage au laser, des enregistrements sont pris en continu ou chaque fois à des intervalles de temps et **en ce que**, si nécessaire pendant l'opération d'usinage, la position du faisceau laser (3) est réajustée, de préférence en temps réel.

9. Procédé d'usinage au laser selon l'une quelconque des revendications 6 à 8, **caractérisé en ce que** la présence ou le type de la buse de sortie (5) ou la taille de l'orifice (6) de la buse de sortie est déterminé(e), de préférence à l'aide de la taille de l'orifice (6) de la buse de sortie ou à l'aide de la forme intérieure de la buse de sortie (5), le type de la buse de sortie (5) étant déterminé.

10. Procédé d'usinage au laser selon l'une quelconque des revendications 6 à 9, **caractérisé en ce que** la présence ou le taux d'encrassement d'un composant optique (15) ou verre protecteur (14) placé derrière la buse de sortie (5) est déterminé(e), de préférence une distribution dans l'espace de l'encrassement sur le composant optique (15) ou verre protecteur (14) étant déterminée, par ex. le taux d'encrassement dans la zone centrale et le taux d'encrassement dans une zone périphérique du composant optique (15) ou verre protecteur (14).

11. Procédé d'usinage au laser selon l'une quelconque des revendications 6 à 10, **caractérisé en ce que** par le système de commande (13), il s'effectue une édition d'une information concernant l'état déterminé sur une interface (16) à l'attention du personnel opérateur.

12. Procédé d'usinage au laser selon l'une quelconque des revendications 6 à 11, **caractérisé en ce qu'**en fonction de l'état déterminé, le système de commande (13) provoque une interruption de l'opération d'usinage au laser.

13. Procédé d'usinage au laser selon l'une quelconque des revendications 6 à 12, **caractérisé en ce que** pendant un enregistrement d'une image par la caméra (10), l'intérieur de la tête d'usinage (4) au laser est éclairé au moyen d'un éclairage intérieur (17).
